Europäisches Patentamt

(19) European Patent Office

Office européen des brevets

(11) Publication number: **0 043 178**
A2

(12) **EUROPEAN PATENT APPLICATION**

(21) Application number: 81200870.4

(22) Date of filing: 31.07.79

(51) Int. Cl.³: **B 62 D 33/02**

(30) Priority: 02.08.78 BE 19000
21.12.78 NL 7812389

(43) Date of publication of application:
06.01.82 Bulletin 82/1

(84) Designated Contracting States:
AT BE CH DE FR GB IT LU SE

(60) Publication number of the earlier application
in accordance with Art. 76 EPC: **0 007 680**

(71) Applicant: Spronck, Emmanuel Servatius Maria
Julianalaan 38 P.O. Box 19
NL-6269 CO Margraten(NL)

(72) Inventor: Spronck, Emmanuel Servatius Maria
Julianalaan 38 P.O. Box 19
NL-6269 CO Margraten(NL)

(74) Representative: de Boer, Hindrik Geert Jan et al,
de Boer & Wigman P.O. Box 5265
De Lairessestraat 131-135 NL-1007 AG Amsterdam(NL)

(54) **Foldable platform sideboard for trucks and trailers.**

(57) Foldable platform sideboard for trucks and trailers which is pivotally connected along the lower edge to the platform floor and comprises members (1,2) pivotally interconnected at their adjoining horizontal sides, of which the lower member (2) is pivoted to the platform floor (5) and the top side of the upper member (1) is pivotally connected to the end (7) of guide rods (6), which rods (6) are pivotally connected with their other end (8) to an upright portion (9) at the platform floor (5) in such a way that the upright portion (9), the guide rods (6) and the two members (1,2) of the platform sideboard form a parallelogram. In closed position substantially all hinges and pivot points lie in a vertical plane while in opened position the two members (1, 2) of the sideboard are positioned adjacent and against each other.

EP 0 043 178 A2

Croydon Printing Company Ltd.

-1-

A foldable platform sideboard for trucks and trailers

The invention relates to a foldable platform sideboard, such as for trucks and trailers.

A platform sideboard for a vehicle in a simple embodiment is hingedly attached to or adjacent the platform floor. The maximum height of the platform sideboard may thereby not be larger than the distance between the floor and the ground level, since otherwise the platform sideboard in lowered position hangs on the ground, as a result of which difficulties during displacement and during loading and unloading are encountered. A limited sideboard height also leads to a limitation of the load and hence to higher carriage rates. When as a matter of fact the load is higher than the platform sideboard, a part of the load may easily proceed to move and fall off the vehicle, which is undesirable also from a safety viewpoint.

By providing foldable sideboards the maximum sideboard height can be larger than the distance between the floor and the ground level. The vehicle can be displaced during loading and unloading, more load can be stocked and the load cannot shift.

It is the object of the invention to remove the above difficulties by providing vehicles with foldable platform sideboards. To this effect a foldable platform sideboard is proposed such as for a truck or trailer, which is pivotally connected along the lower edge to the platform floor, and comprises at least two members which are pivotally interconnected at their adjoining horizontal sides, the bottom side of the lower member being pivoted to or adjacent the platform floor, while the top side of the upper member of the sideboard is pivotally connected to the end of guide rods, which is characterized in that said guide rods are connected pivotally with their other end to an upright portion of the platform floor in such a way that said upright portion, the guide rods and two members of the platform sideboard form a parallelogram.

Preferably in a such designed sideboard, in closed position, substantially all hinges and pivot points lie in a vertical place, while in opened position, depending on the place and the length of the guide rods, the two parts of the sideboard are positioned adjacent and against each other. In this manner the maximal height of the sideboard may be considerably more than the distance between platform floor and the ground.

Fig. 1 is a side view of a truck having a platform sideboard according to the invention;

Fig. 2 diagrammatically shows a cross section of a part of a truck on the line II-II in Fig. 1, with the sideboard being closed;

Fig. 3 shows in accordance with Fig. 2, a sideboard in half-open position;

Fig. 4 shows the position with fully opened sideboard; and

Fig. 5 concerns a variant embodiment wherein use is made of outwardly pivoting uprights so that use may be made of a rail guide for a cargo crane.

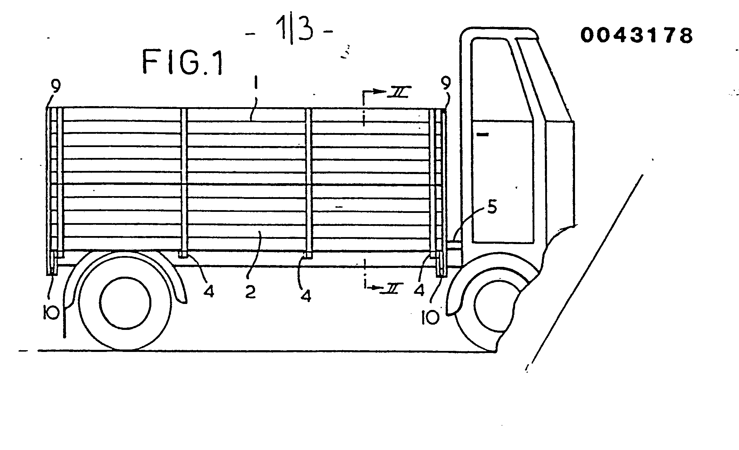

Fig. 1 shows a platform sideboard according to the invention, comprising an upper member 1 and a lower member 2, which are interconnected by means of hinges 3. The lower member 2 is attached through hinges 4 to a part of the platform floor 5.

To the top edge of the upper portion 1 there are pivotally connected guide rods 6 (at 7), which rods 6 with their other ends at 8 are pivotally connected to uprights 9 of the truck, said uprights in turn are pivotally connected at 10 to a constructional member, not shown, connected to the platform floor 5. It is observed that the uprights need not always be pivotally connected, while the guide rods may also be secured to other parts of a truck construction, e.g. to end partitions.

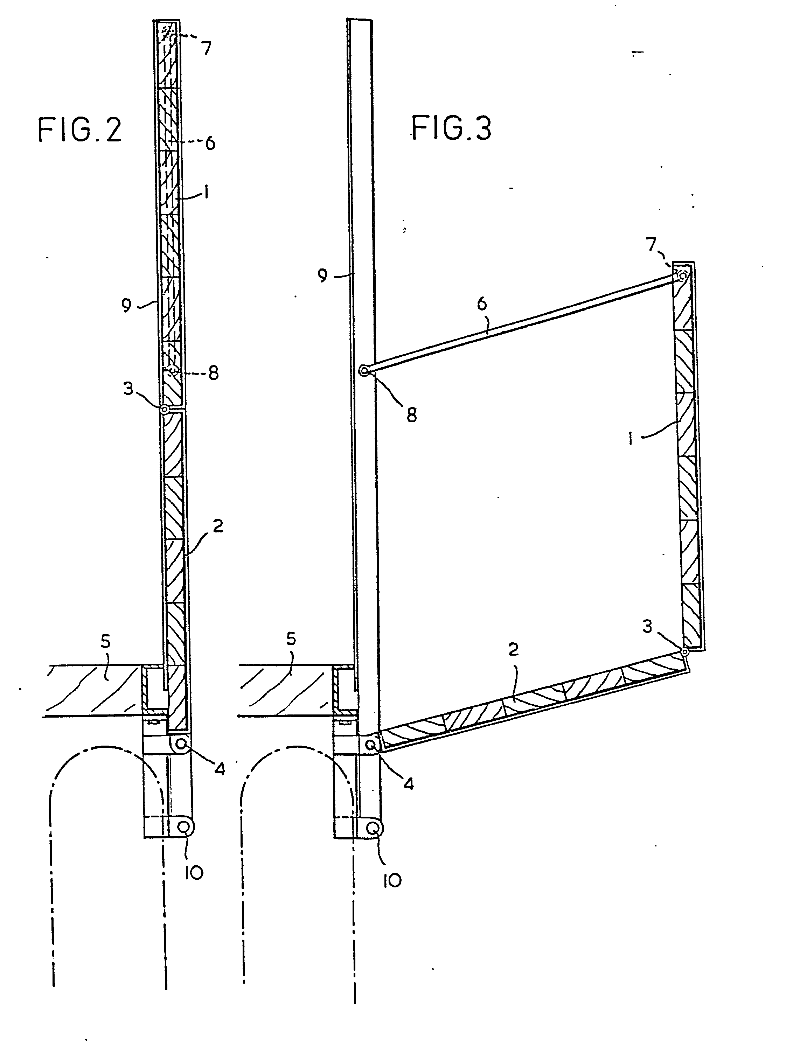

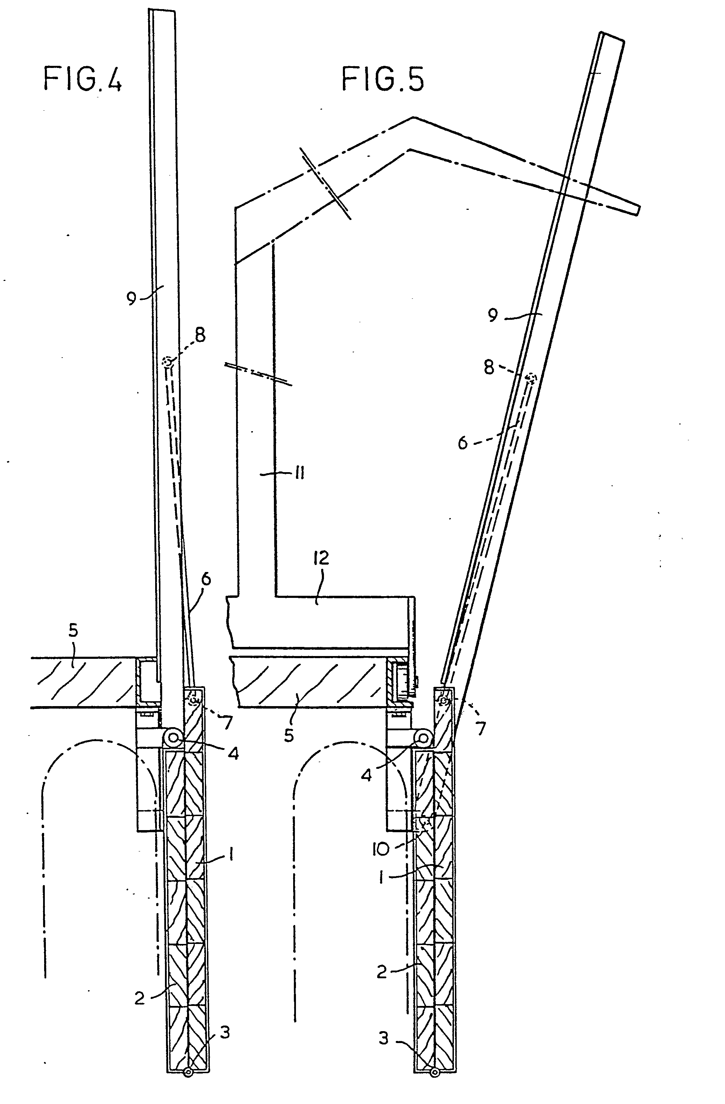

The application of hinged uprights has the advantage that a cargo crane 11 provided with a substructure 12 which is movable in a known manner, in laterally opening sections, may unimpededly pass the uprights, as indicated in Fig. 5. The sideboards and uprights are furthermore fitted with known means for opening, closing, locking and pivoting. In the embodiment, as appears in particular from Fig. 3, use is made of a quadrangular linkage or parallelogram with substantially parallel parts 2 and 6, resp. 1 and 9, whereby the pivot point 8 is so chosen that in closed position the two parts 1 and 2 are co-extensive and all pivot points are substantially co-planar, while in entirely opened position the two sideboard portions are swung down side by side vertically underneath the platform floor 5. It is observed that instead of a guide rod 6, use may also be made of chains or cables, which run over pulleys or sheaves and which are possibly balanced by means of weight or springs.

For longer sideboards, if desired, these may be split into a plurality of parts behind each other.

C L A I M S

1.      A foldable platform sideboard such as for a truck or trailer, which is pivotally connected along the lower edge to the platform floor, and comprises at least two members (1, 2) which are pivotally interconnected at their adjoining horizontal sides, the bottom side of the lower member (2) being pivoted to or adjacent the platform floor (5), while the top side of the upper member (2) of the sideboard is pivotally connected to the end (7) of guide rods (6), characterized in that said guide rods (6) are connected pivotally with their other end (8) to an upright portion (9) at the platform floor (5) in such a way that said upright portion (9), the guide rods (6) and two members (1, 2) of the platform sideboard form a parallelogram.

2.      A platform sideboard according to claim 1, characterized in that the upright members (9) are formed by the uprights of the platform.

3.      A foldable platform sideboard according to claim 2, characterized in that the uprights (9) are pivotally attached to the frame of the platform.

4.      A foldable platform sideboard according to any one of the preceding claims, characterized in that in closed position of the sideboard, all hinges and hinge points lie substantially in a vertical plane, while the two members (1, 2) of the sideboard in opened position are suspended adjacent and against each other underneath the platform floor (5).

FIG.1

- 1|3 -

0043178

0043178

FIG.2

FIG.3

0043178

FIG.4

FIG.5